Europäisches Patentamt

European Patent Office

Office européen des brevets

(11) Veröffentlichungsnummer : **0 160 837**
**B1**

# (12) EUROPÄISCHE PATENTSCHRIFT

(45) Veröffentlichungstag der Patentschrift :
06.07.88

(51) Int. Cl.⁴ : **B 60 S   1/40**

(21) Anmeldenummer : 85103992.5

(22) Anmeldetag : 02.04.85

(54) **Wischvorrichtung für Scheiben von Kraftfahrzeugen.**

(30) Priorität : 04.05.84 DE 3416505

(43) Veröffentlichungstag der Anmeldung :
13.11.85 Patentblatt 85/46

(45) Bekanntmachung des Hinweises auf die Patenterteilung : 06.07.88 Patentblatt 88/27

(84) Benannte Vertragsstaaten :
BE DE FR IT

(56) Entgegenhaltungen :
DE-A- 3 320 329
DE-C- 1 048 495
GB-A-  832 459
US-A- 3 147 508
US-A- 3 254 358

(73) Patentinhaber : ROBERT BOSCH GMBH
Postfach 50
D-7000 Stuttgart 1 (DE)

(72) Erfinder : Geis, Andreas
Gerhard-Hauptmann-Strasse 5
D-7580 Bühl (DE)
Erfinder : Lorenz, Karlheinz
Dalbergstrasse 15
D-7570 Baden-Baden 23 (DE)
Erfinder : Zorn, Günter, Dipl.-Ing.
Fasanenstrasse 3
D-7580 Bühl (DE)

EP 0 160 837 B1

## Beschreibung

### Stand der Technik

Die Erfindung geht aus von einer Wischvorrichtung nach der Gattung des Hauptanspruchs. Es ist aus einem internen Stand der Technik schon eine Wischvorrichtung bekannt, bei der der Adapter auslenkbare Backen zum vorgespannten Fassen des Gelenkbolzens aufweist. Dazu hat jeder Backen an der dem anderen Backen zugewandten Seite eine kreisabschnittförmige Hinterschneidung, die zusammen die Lagerstelle für den Gelenkzapfen des Wischblatts bilden. Zum Einbringen des Gelenkzapfens in seine Lagerstelle müssen die beiden Backen ausgelenkt werden. Da sie elastisch mit dem Adapter verbunden sind, federn sie danach in ihre Ausgangsposition und sichern so den Gelenkzapfen in der Lagerstelle. Eine solche Sicherung ist ausreichend, solange der Wischerarm mit dem Wischblatt nur eine pendelnde Wischbewegung ausführt. Ist dieser jedoch eine translatorische Hin- und Herbewegung überlagert — was zum Erreichen eines möglichst großen Wischfeldes notwendig sein kann — wird die Lagerstelle derart belastet, daß eine dauerhafte, sichere Lagerung des Gelenkzapfens in der durch die Hinterschneidungen gebildeten Gelenkstelle nicht gewährleistet ist. Um diesen Mangel abzustellen, könnten zwar die Rastkräfte erhöht werden, was aber zu Schwierigkeiten bei der Montage und der Demontage zwischen Wischerarm und Wichblatt führt.

Bei einer anderen bekannten Wischvorrichtung hat man deshalb einen der beiden Backen schwenkbar gelagert und einen sogenannten Kniehebelmechanismus zum Verstellen und Arretieren dieses Backens angeordnet. Die im Betrieb der Wischvorrichtung auftretende Kräfte können diesen Mechanismus, insbesondere in dessen Gelenkstellen so schädigen, daß eine dauerhafte, sichere Befestigung zwischen Adapter und Wischblatt nicht gewährleistet ist.

### Vorteile der Erfindung

Die erfindungsgemäße Wischvorrichtung mit den Merkmalen des Hauptanspruchs hat demgegenüber den Vorteil, daß der Gelenkbolzen selbst keine direkte, aktive Haltefunktion im Bereich der Trennstelle zwischen Wischerarm und Adapter mehr hat. Der Halterung des Adapters am Gelenkbolzen kann also durch eine robuste Konstruktion entsprechend Rechnung getragen werden. Auch die Trennstelle selbst kann den speziellen Anforderungen entsprechend großflächig — also mit geringer spezifischer Flächenbelastung — ausgebildet werden. Die Löffelform nimmt alle bei der Hin- und Herbewegung des Wischers auftretenden Kräfte auf, so daß auch bei Dauerbelastung dieser Verbindung keine Schädigung eintritt.

Durch die in den Unteransprüchen aufgeführten Maßnahmen sind vorteilhafte Weiterbildungen und Verbesserungen der im Hauptanspruch angegebenen Wischvorrichtung möglich.

### Zeichnungen :

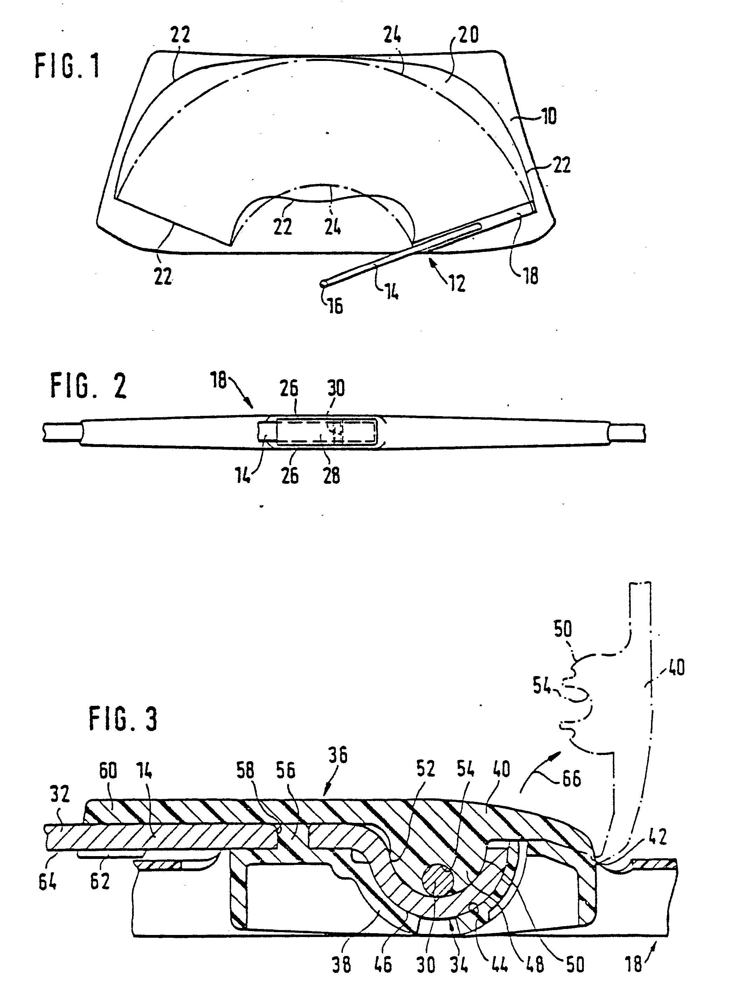

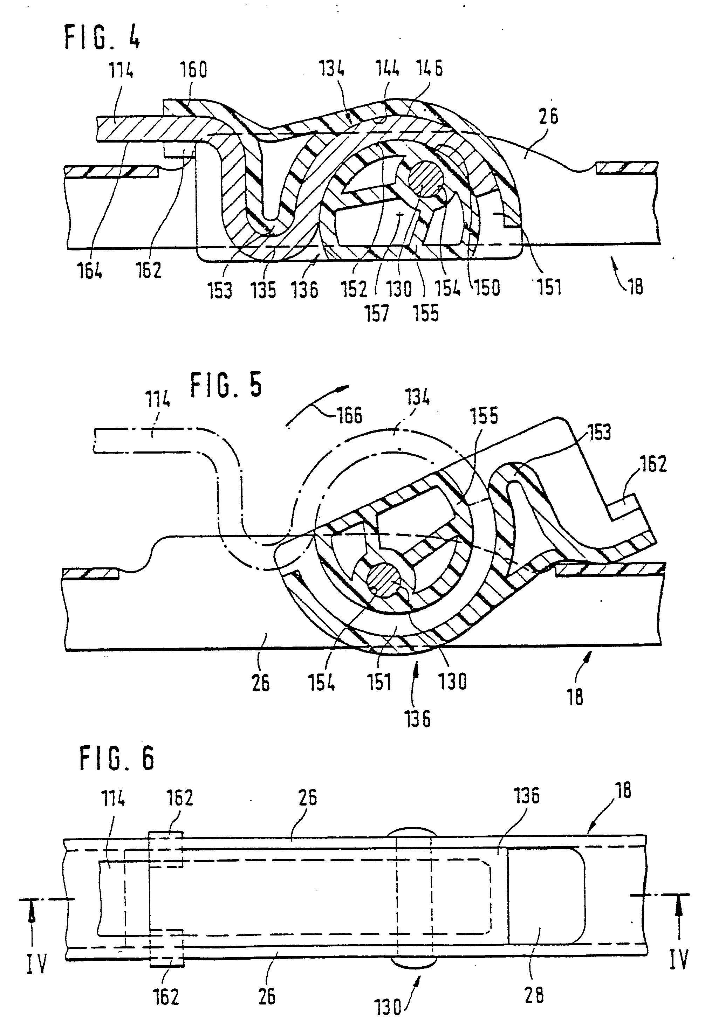

Ausführungsbeispiele der Erfindung sind in den Zeichnungen dargestellt und in der folgenden Beschreibung näher erläutert. Es zeigen Figur 1 eine Prinzipdarstellung einer Wischvorrichtung, bei welcher der Wischerarm pendelnd angetrieben ist und bei der der Pendelbewegung eine translatorische Hin- und Herbewegung überlagert ist, Figur 2 eine Draufsicht auf den Mittelbereich eines zur Wischvorrichtung gehörenden Wischblatts, in vergrößerter Darstellung, Figur 3 einen Teil-Längsschnitt durch ein Wischblatt mit einem am freien Ende des Wischerarms angeordneten Adapter zum Halten des Wischblatts, in vergrößerter Darstellung, Figur 4 einen Teilschnitt durch eine andere Ausführung des Adapters und des Wischerarms, Figur 5 die Anordnung gemäß Figur 4, wobei sich der Adapter in seiner Lösestellung befindet und Figur 6 eine Draufsicht auf die Anordnung gemäß Figur 4.

### Beschreibung der Ausführungsbeispiele

Eine in Figur 1 dargestellte Front- oder Heckscheibe 10 eines nicht näher dargestellten Kraftfahrzeuges ist mit einer Wischvorrichtung 12 versehen, welche einen pendelnd angetriebenen Wischerarm 14 hat, der an einer Wischerwelle 16 befestigt ist. An dem freien Ende des Wischerarms 14 ist ein Wischblatt 18 angelenkt. Der Pendelbewegung des Wischerarms 14 ist eine translatorische Hin- und Herbewegung überlagert, so daß das auf der Scheibe 10 aufliegende Wischblatt 18 ein Wischfeld 20 überstreicht, welches durch die auf der Windschutzscheibe 10 vorhandenen ausgezogenen Linien 22 begrenzt ist. Der Verlauf der Linie 22 zeigt, daß der Wischerarm 14 im Bereich seiner senkrechten Stellung kürzer sein muß als nach einem Schwenkwinkel von ca. 30 Grad aus dieser Mittelstellung heraus. Die strichpunktiert dargestellten Linien 24 geben an, was für ein Wischfeld überstrichen würde, wenn der Wischerarm keine translatorische Hin- und Herbewegung ausführt. Es zeigt sich, daß das von den Linien 24 begrenzte Wischfeld erheblich kleiner wäre als das Wischfeld, welches durch die Linien 22 begrenzt ist.

Wie die Draufsicht auf das Wischblatt 18 in Figur 2 zeigt, hat das Wischblatt in seinem Mittelbereich einen von zwei zueinander parallel angeordneten Wangen 26 begrenzten Durchbruch 28. In den beiden Wangen 26 ist ein Gelenkzapfen 30 gehalten, der zum Verbinden des Wischblatts 18 mit dem Wischerarm 14 dient.

Der Wischerarm 14 weist eine Stange 32 auf (Figur 3), an deren freien Ende ein löffelartig gekrümmter Abschnitt 34 angeordnet ist, an dem ein aus einem elastischen Kunststoff bestehender Adapter 36 befestigt ist. Die Krümmung des Abschnitts 34 ist so angeordnet, daß deren Konvexseite 46 der zu wischenden Scheibe 10 zugewandt ist. Unter löffelartiger Krümmung wird verstanden, daß der Wischerarm etwa so geformt ist, wie sich die Schnittfläche eines in Längsrichtung geschnittenen Löffels darstellt. Eine sphärische Krümmung ist nicht erforderlich. Der Adapter 36 hat eine erste Hälfte 38 und eine zweite Hälfte 40. Die beiden Adapterhälften 38 und 40 sind über ein Filmgelenk 42 einstückig miteinander verbunden. Die erste Adapterhälfte 38 weist eine Vertiefung auf, deren Wand 44 der Konvexseite 46 des Wischerarmabschnitts 34 angepaßt ist. Die zweite Adapterhälfte 40 ist mit einem Vorsprung 48 versehen, dessen Wand 50 dem Verlauf der Konkavseite 52 des löffelartig gekrümmten Wischerarmabschnitts 34 angepaßt ist. Die beiden Wände 44 und 50 der beiden Adapterhälften 38 und 40 liegen in einem Abstand voneinander, der auf die Dicke des Wischerarms 14 bzw. dessen Abschnitts 34 abgestimmt ist. Weiter weist der Vorsprung 48 eine Rastaufnahme 54 auf, welche als Lagerausnehmung für den in den Wangen 26 des Wischblatts gelagerten Gelenkbolzens 30 dient. Ferner ist die erste Adapterhälfte 38 mit einem Zapfen 56 versehen, welche in eine Bohrung 58 im Wischerarm 14 greift, wenn der Abschnitt 34 des Wischerarms in der in Figur 3 dargestellten Weise mit dem Adapter 36 verbunden ist. Dabei ist auch der Gelenkbolzen 30 in seine Lagerausnehmung 54 eingebracht. Der Adapter 36 ist fest mit dem Wischerarm 14 verbunden, während das Wischblatt 18 gegenüber dem Wischerarm 14 bzw. dem Adapter 36 um den Gelenkbolzen 30 schwenken kann. Weiter hat die zweite Hälfte 40 des Adapters 36 einen Ansatz 60, der sich auf der von der zu wischenden Scheibe abgewandten Seite des Wischerarms 14 in Richtung auf die Wischerwelle 16 erstreckt. Am freien Ende des Ansatzes 60 sind zwei den Wischerarm 14 übergreifende Rasthaken 62 angeordnet, welche auf der der Scheibe zugewandten Seite 64 des Wischerarms 14 diesen hintergreifen und eine zusätzliche Verbindung zwischen Adapter 36 und Wischerarm 14 bewirken. Zum Lösen des Wischblatts von dem Wischerarm wird die zweite Adapterhälfte 40 unter Überwindung der Haltekraft der Rasthaken 62 und unter Überwindung der Haltekraft der als Rastaufnahme ausgebildeten Lagerausnehmung 54 am Gelenkbolzen 30 in Richtung des Pfeiles 66 in die in Figur 3 strichpunktiert dargestellte Lösestellung gebracht und das Wischblatt 18, durch Schwenken entgegen dem Pfeil 66 vom Wischerarm 14 abgenommen.

Bei der Ausführung gemäß Figur 4 ist an dem Gelenkbolzen 130 des Wischblatts 18 ein einstückiger Adapter 136 angelenkt (Figur 4). Der Adapter 136 ist aus einem elastischen Kunststoff hergestellt und weist einen Kanal 151 auf, der durch mit Abstand voneinander liegende Wände 144 und 150 begrenzt ist. Die Wände 144 und 150 sind so gekrümmt, daß sie einer Krümmung angepaßt sind, welche einer löffelartigen Verformung des freien Endabschnitts 134 des Wischerarms 14 entspricht. Zwischen dem gekrümmten Endabschnitt 134 und dem gestreckten Bereich des Wischerarms 114 ist der Wischerarm mit einer Kröpfung 135 versehen, welche der Krümmung des freien Endabschnitts 134 entgegengerichtet ist. Der Krümmungsverlauf der Wände 144 und 150 ist auf die Krümmung der Konkavseite 152 und der Konvexseite 146 des löffelartig gekrümmten Endabschnitts 134 des Wischerarms 114 so abgestimmt, daß dieser passend in den Kanal 151 eingebracht werden kann (Fig. 4). Die Wand 144 des Kanals 151 geht in eine Nase 153 über, welche in den Innenbereich der Kröpfung 135 passend eingreift. Im Kernbereich 155 des Adapters 136, innerhalb der Krümmung ist eine Lagerbohrung 154 für den Gelenkbolzen 130 angeordnet, an dem der Adapter 136 pendelbar aufgehängt ist. Wie Figur 4 weiter zeigt ist die Krümmung des Wischerarmabschnitts 134 kreisbogenförmig ausgebildet und so angeordnet, daß in Betriebsstellung der Wischvorrichtung (Fig. 4) die Konkavseite 152 der Krümmung der zu wischenden Scheibe 10 zugekehrt ist. An die Nase 153 des Adapters 136 schließt sich ein Fortsatz 160 an, welcher mit Rasthaken 162 versehen ist. Die Rasthaken 162 hintergreifen den Wischerarm 114 auf seiner der Scheibe 10 zugekehrten Seite 164, so daß eine Sicherung des Adapters 136 an dem Wischerarm 114 gegeben ist, wenn sich dieser in der in Figur 4 dargestellten Betriebsstellung befindet. Die Lagerbohrung 154 für den Gelenkbolzen 130 ist exzentrisch zum Verlauf des Kanals 151 angeordnet, so daß sich eine besonders sichere Einhaltung der Betriebsstellung ergibt. Die Anordnung der Lagerbohrung 154 ist so getroffen, daß sie sich in der in Figur 4 dargestellten Betriebsstellung zwischen dem Zentrum 157 der Krümmung 134 und dem freien Ende des mit dem Wischblatt 18 verbundenen Wischerarms 114 auf der von der Scheibe abgewandten Seite des Krümmungszentrums 157 befindet. Dadurch wird eine besonders sichere Verbindung zwischen Wischblatt und Wischerarm erreicht, welche auch nicht durch die schon beschriebenen Betriebsbewegungen des Wischblatts auf der Scheibe gelöst werden kann.

Zum Lösen des Wischblatts 18 vom Wischerarm 114 werden die Rasthaken 162 durch Schwenken des Adapters 136 im Uhrzeigersinn (Pfeil 166), von dem Wischerarm 114 gelöst. Wenn der Adapter dann weiter in Richtung des Pfeiles 166 bis in die in Figur 5 dargestellte Lösestellung geschwenkt wird, kann das Wischblatt 18 bzw. der Adapter 136 von dem löffelartig gekrümmten Endabschnitt 134 des Wischerarms 114 (strichpunktiert dargestellt) abgenommen werden.

Beiden Ausführungsbeispielen ist gemeinsam, daß der mit dem Adapter 36 bzw. 136 verbundene Abschnitt 34 bzw. 134 des Wischerarms 14 bzw. 114 löffelartig gekrümmt ist und der Adapter zwei mit Abstand voneinander liegende der Löffelform des Abschnitts 34 bzw. 134 angepaßte Wände 44, 50 bzw. 144, 150 aufweist, zwischen denen der Abschnitt des Wischerarms angeordnet ist.

Bei den Ausführungen gemäß der Figur 3 und 4 sind die Adapter 36 bzw. 136 zwischen den Wangen 26 des Wischblatts 18 angeordnet, was aber nicht zwingend ist. Genausogut können die Adapter auch an seinem seitlich aus dem Wischblatt ragenden Gelenkbolzen angelenkt werden.

**Patentansprüche**

1. Wischvorrichtung für Scheiben von Kraftfahrzeugen, mit einem pendelnd angetriebenen Wischerarm (14 bzw. 114), der eine diese Pendelbewegung überlagernde, translatorische Hin- und Herbewegung in seiner Längserstreckung ausführt, mit einem Gelenkbolzen (30) und einem mit dem Wischerarm verbundenen Adapter (36 bzw. 136), der den am Wischblatt (18) angeordneten Gelenkbolzen in einer Lagerausnehmung (54 bzw. 154) pendelbar aufnimmt, dadurch gekennzeichnet, daß der mit dem Adapter (36 bzw. 136) verbundene Abschnitt (34 bzw. 134) des Wischerarms (14 bzw. 114) löffelartig gekrümmt ist und der Adapter (36 bzw. 136) zwei mit Abstand voneinander liegende, der Löffelform des Abschnitts angepaßte Wände (44, 50 bzw. 144, 150) aufweist, zwischen denen der Abschnitt (34 bzw. 134) des Wischerarms (14 bzw. 114) angeordnet ist.

2. Wischvorrichtung nach Anspruch 1, dadurch gekennzeichnet, daß die Konvexseite (46) der löffelartigen Krümmung der zu wischenden Scheibe (10) zugewandt ist und der Adapter (36) aus zwei mittels eines Gelenks (42) miteinander verbundenen Hälften (38, 40) besteht, von denen jede Hälfte eine der beiden Wände (44, 50) aufweist.

3. Wischvorrichtung nach Anspruch 2, dadurch gekennzeichnet, daß der Adapter (36) aus einem elastischen Kunststoff gefertigt und das Gelenk als Filmgelenk (42) ausgebildet ist.

4. Wischvorrichtung nach einem der Ansprüche 2 oder 3, dadurch gekennzeichnet, daß an einem in die Konkavseite (52) der löffelartigen Krümmung (34) ragenden Vorsprung (48) der einen Adapterhälfte (40) eine Lagerausnehmung (54) für den Gelenkbolzen (30) des Wischblatts (18) angeordnet ist.

5. Wischvorrichtung nach Anspruch 4, dadurch gekennzeichnet, daß die Lagerausnehmung (54) an dem Gelenkbolzen (30) verrastbar ist.

6. Wischvorrichtung nach einem der Ansprüche 4 oder 5, dadurch gekennzeichnet, daß an der den Vorsprung (48) aufweisenden Adapterhälfte (40) auslenkbare Rasthaken (62) angeordnet sind, welche den Wischerarm (14) auf seine der Scheibe (10) zugewandten Seite (64) hintergreifen.

7. Wischvorrichtung nach Anspruch 1, dadurch gekennzeichnet, daß in Betriebsstellung die Konkavseite (152) der löffelartigen Krümmung des freien Wischerarm-Endabschnittes (134) der zu wischenden Scheibe (10) zugewandt ist und in einem der Krümmung angepaßten Kanal (151) einführbar ist, der die beiden Wände (144 und 150) aufweist.

8. Wischvorrichtung nach Anspruch 7, dadurch gekennzeichnet, daß der Adapter (136) eine Lagerbohrung (154) für den Gelenkbolzen (130) des Wischblatts (18) hat und die Adapter-Gelenkbohrung (154) innerhalb der Krümmung des Kanals (151) angeordnet ist.

9. Wischvorrichtung nach Anspruch 8, dadurch gekennzeichnet, daß die löffelartige Krümmung (134) kreisbogenförmig ausgebildet ist und die Lagerbohrung (154) zu der Krümmung exzentrisch angeordnet ist.

10. Wischvorrichtung nach Anspruch 9, dadurch gekennzeichnet, daß sich in Betriebsstellung die Lagerbohrung (154) zwischen dem Zentrum (157), der Krümmung (134) und dem freien Ende des mit dem Wischblatt (18) verbundenen Wischerarms (114) befindet.

11. Wischvorrichtung nach einem der Ansprüche 9 oder 10, dadurch gekennzeichnet, daß sich in Betriebsstellung die Lagerbohrung (154) auf der von der Scheibe (10) abgewandten Seite des Zentrums (157) der Krümmung (134) befindet.

12. Wischvorrichtung nach einem der Ansprüche 7 bis 11, dadurch gekennzeichnet, daß der Wischerarm (114) eine zur Scheibe (10) gerichtete Kröpfung (135) aufweist, die der Krümmung des Abschnitts (134) entgegengerichtet ist und in diese übergeht.

13. Wischvorrichtung nach Anspruch 12, dadurch gekennzeichnet, daß der Adapter (136) mit einer in die Kröpfung (135) greifenden Nase (153) versehen ist.

14. Wischvorrichtung nach einem der Ansprüche 7 bis 13, dadurch gekennzeichnet, daß der Adapter (136) aus einem elastischen Kunststoff gefertigt und mit auslenkbaren Rasthaken (162) versehen ist, welche den Wischerarm (114) auf seiner der Scheibe (20) zugewandten Seite (164) hintergreifen.

**Claims**

1. Wiping apparatus for windscreens of motor vehicles, having a swing-driven wiper arm (14 and 114), which executes a translatory to and fro movement in its longitudinal extent, superimposed on this swing movement, having a joint bolt (30) and an adaptor (36 and 136), which is connected to the wiper arm and receives in swingable manner in a bearing recess (54 and 154) the joint bolt arranged on the wiping blade (18), characterized in that the section (34 and 134) of the wiper arm (14 and 114) connected to the adaptor (36 and 136) is curved spoon-like and the adaptor (36 and 136) has two walls (44, 50 and 144, 150) spaced apart and adapted to the spoon shape of the section, between, which walls the section (34 and 134) of the wiper arm (14 and 114) is arranged.

2. Wiping apparatus according to Claim 1, characterized in that the convex side (46) of the spoon-like curvature faces the windscreen (10) to be wiped and the adaptor (36) consists of two halves (38, 40) connected to each other by means of a joint (42), of which each half has one of the two walls (44, 50).

3. Wiping apparatus according to Claim 2, characterized in that the adaptor (36) is made from a flexible plastic and the joint is designed as a film joint (42).

4. Wiping apparatus according to one of Claims 2 or 3, characterized in that a bearing recess (54) for the joint bolt (30) of the wiping blade (18) is arranged on a projection (48) of the one adaptor half (40) protruding into the concave side (52) of the spoon-like curvature (34).

5. Wiping apparatus according to Claim 4, characterized in that the bearing recess (54) can be locked on the joint bolt (30).

6. Wiping apparatus according to one of Claims 4 or 5, characterized in that deflectable catch hooks (62) are arranged on the adaptor half (40) having the projection (48) and engage behind the wiper arm (14) on its side (64) facing the windscreen (10).

7. Wiping apparatus according to Claim 1, characterized in that, in operating position, the concave side (152) of the spoon-like curvature of the free wiper arm end section (134) faces the windscreen (10) to be wiped and can be introduced in a channel (151) which is adapted to the curvature and has the two walls (144 and 150).

8. Wiping apparatus according to Claim 7, characterized in that the adaptor (136) has a bearing bore (154) for the joint bolt (130) of the wiping blade (18) and the adaptor joint bore (154) is arranged inside the curvature of the channel (151).

9. Wiping apparatus according to Claim 8, characterized in that the spoon-like curvature (134) is designed in the shape of a circular arc and the bearing bore (154) is arranged eccentrically with respect to the curvature.

10. Wiping apparatus according to Claim 9, characterized in that, in operating position, the bearing bore (154) is situated between the centre (157), the curvature (134) and the free end of the wiper arm (114) connected to the wiping blade (18).

11. Wiping apparatus according to one of Claims 9 or 10, characterized in that, in operating position, the bearing bore (154) is situated on the side of the centre (157) of the curvature (134) away from the windscreen (10).

12. Wiping apparatus according to one of Claims 7 to 11, characterized in that the wiper arm (114) has an elbow (135) which is directed towards the windscreen (10), is directed oppositely to the curvature of the section (134) and merges with the latter.

13. Wiping apparatus according to Claim 12, characterized in that the adaptor (136) is provided with a lug (153) engaging in the elbow (135).

14. Wiping apparatus according to one of Claims 7 to 13, characterized in that the adaptor (136) is made from a flexible plastic and is provided with deflectable catch hooks (162), which engage behind the wiper arm (114) on its side (164) facing the windscreen (20).

**Revendications**

1. Dispositif pour essuyer des glaces d'automobile, comportant un bras d'essuie-glace (14 ou 144) entraîné par un mouvement pendulaire, et qui effectue, se superposant à ce mouvement pendulaire, un mouvement de translation de va-et-vient dans la direction de sa longueur, comportant également un axe d'articulation (30) et un adaptateur (36 ou 136) relié au bras d'essuie-glace, et qui reçoit dans un évidement de support (54 ou 154), en pouvant osciller, l'axe d'articulation monté sur la raclette (18) de l'essuie-glace, dispositif caractérisé en ce que le tronçon (34 ou 134) du bras d'essuie-glace (14 ou 114) qui est relié à l'adaptateur (36 ou 136) est courbé à la manière d'une cuillère, et l'adaptateur (36 ou 136) comporte deux parois (44, 50 ou 144, 150) adaptées à la forme de cuillère de ce tronçon et situées à distance l'une de l'autre, et entre lesquelles est disposé le tronçon (34 ou 134) du bras d'essuie-glace (14 ou 114).

2. Dispositif d'essuyage selon la revendication 1, caractérisé en ce que la face convexe (46) de la courbure du genre de celle d'une cuillère est tournée vers la glace (10) à essuyer, et l'adaptateur (36) est constitué par deux moitiés (38, 40) reliées l'une à l'autre au moyen d'une articulation (42), et dont chacune comporte l'une des deux parois (44, 50).

3. Dispositif d'essuyage selon la revendication 2, caractérisé en ce que l'adaptateur (36) est fabriqué en une matière synthétique élastique, et l'articulation est constituée sous forme d'une articulation en feuille mince.

4. Dispositif d'essuyage selon l'une des revendications 2 ou 3, caractérisé en ce que sur une saillie (48) de l'une des moitiés (40) de l'adaptateur qui pénètre dans la face concave (52) de la courbure (34) du genre de celle d'une cuillère est ménagé un évidement de support (54) pour l'axe d'articulation (30) de la raclette (18) de l'essuie-glace.

5. Dispositif selon la revendication 4, caractérisé en ce que l'évidement de support (54) peut se cranter sur l'axe d'articulation (30).

6. Dispositif d'essuyage selon l'une des revendications 4 ou 5, caractérisé en ce que sur la moitié (40) de l'adaptateur présentant la saillie (48) sont montés des crochets de crantage (62) susceptibles de s'écarter, qui prennent prise par derrière sur le bras d'essuie-glace (14), sur sa face (64) située en regard de la glace (10).

7. Dispositif d'essuyage selon la revendication 1, caractérisé en ce que, en position de fonctionnement, la face concave (152) de la courbure, du genre de celle d'une cuillère, du tronçon d'extrémité libre (134) du bras de l'essuie-glace est tournée vers la glace (10) à essuyer et peut s'introduire dans un canal (151) adapté à cette courbure, et qui est pourvu des deux parois (144 et 150).

8. Dispositif d'essuyage selon la revendication 7, caractérisé en ce que l'adaptateur (136) comporte un alésage de support (154) pour l'axe d'articulation (130) de la raclette (18) de l'essuie-glace, et l'alésage de support (154) de l'adaptateur est ménagé à l'intérieur de la courbure du canal (151).

9. Dispositif d'essuyage selon la revendication 8, caractérisé en ce que la courbure (134) du genre de celle d'une cuillère est constituée en forme d'arc de cercle et l'alésage de support (154) est disposé en position excentrée par rapport à cette courbure.

10. Dispositif d'essuyage selon la revendication 9, caractérisé en ce que, en position de fonctionnement, l'alésage de support (154) se trouve entre le centre (157) de la courbure (134) et l'extrémité libre du bras d'essuie-glace (114) relié à la raclette (18) de l'essuie-glace.

11. Dispositif d'essuyage selon l'une des revendications 9 ou 10, caractérisé en ce que, en position de fonctionnement, l'alésage de support (154) se trouve du côté du centre (157) de la courbure (134) qui est situé à l'opposé de la glace (10).

12. Dispositif d'essuyage selon l'une des revendications 7 à 11, caractérisé en ce que le bras (114) de l'essuie-glace présente un coude (135) dirigé vers la glace (10), coude qui est dirigé en sens inverse de la courbure du tronçon (134) et se continue par celle-ci.

13. Dispositif d'essuyage selon la revendication 12, caractérisé en ce que l'adaptateur (136) est pourvue d'une partie en saillie en forme de nez (153) engagée dans le coude (135).

14. Dispositif d'essuyage selon l'une des revendications 7 à 13, caractérisé en ce que l'adaptateur (136) est fabriqué en une matière synthétique élastique et est muni de crochets de crantage (162), susceptibles de s'écarter, qui prennent prise par derrière sur le bras d'essuie-glace (114), sur sa face (164) située en regard de la glace (10).

FIG.1

22  24  20

10

22

22

22  24

14  12  18

16

FIG. 2

18  26  30

14  26  28

FIG. 3

50

54

40

60  14  58  56  36  52  54  40

32  42

64  62  66

38  46  30  34  44  48  50  18

1

FIG. 4

FIG. 5

FIG. 6

2